(19) Europäisches Patentamt / European Patent Office / Office européen des brevets

(11) **EP 4 585 564 A1**

(12) **EUROPEAN PATENT APPLICATION**
published in accordance with Art. 153(4) EPC

(43) Date of publication:
**16.07.2025 Bulletin 2025/29**

(21) Application number: **23863216.0**

(22) Date of filing: **06.09.2023**

(51) International Patent Classification (IPC):
***C01F 11/18*** (2006.01)    ***B09B 3/70*** (2022.01)

(52) Cooperative Patent Classification (CPC):
**B09B 3/70; C01F 11/18**

(86) International application number:
**PCT/JP2023/032545**

(87) International publication number:
**WO 2024/053678 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 JP 2022143381**

(71) Applicants:
- **Sumitomo Osaka Cement Co., Ltd.**
  **Tokyo, 105-8641 (JP)**
- **Yamaguchi University**
  **Yamaguchi 753-8511 (JP)**
- **Kyushu University, National University Corporation**
  **Nishi-ku**
  **Fukuoka-shi**
  **Fukuoka 819-0395 (JP)**

(72) Inventors:
- **KIKUCHI Sadato**
  **Tokyo 105-8641 (JP)**
- **OIZUMI Risa**
  **Tokyo 105-8641 (JP)**
- **KONISHI Masayoshi**
  **Tokyo 105-8641 (JP)**
- **HIGA Mitsuru**
  **Ube-shi, Yamaguchi 755-8611 (JP)**
- **TANIGUCHI Ikuo**
  **Fukuoka-shi, Fukuoka 819-0395 (JP)**

(74) Representative: **Sonnenberg Harrison Partnerschaft mbB**
  **Herzogspitalstraße 10a**
  **80331 München (DE)**

(54) **CALCIUM CARBONATE PRODUCTION METHOD AND PRODUCTION SYSTEM**

(57) Provided are a method and a system for producing calcium carbonate, in which a content of alkali in calcium carbonate obtained using a calcium-containing waste can be controlled. There is provided a method (system) for producing calcium carbonate from a calcium-containing waste, including: a calcium dissolution step of adding aqueous hydrochloric acid to a calcium-containing waste and dissolving calcium to produce an aqueous solution containing a calcium ion; a separation step of adjusting a hydrogen ion concentration index of the aqueous solution containing a calcium ion and separating Mg and the like from the aqueous solution; a calcium carbonate preparation step of producing calcium carbonate by adding an aqueous solution containing potassium carbonate and/or sodium carbonate to the calcium ion-containing aqueous solution obtained in the separation step to cause a reaction to occur, in which in the calcium carbonate preparation step, an addition rate of the aqueous solution containing potassium carbonate and/or sodium carbonate is controlled such that κ represented by a specific expression is 3000 or lower.

EP 4 585 564 A1

## FIG. 1

Ca-CONTAINING WASTE

↓

ADJUST PARTICLE SIZE

↓

**Ca DISSOLUTION STEP**

HCl
CLEANING WATER

DISSOLVE AND EXTRACT Ca (pH0.5 TO 5)

RESIDUE ←

**SEPARATION STEP**

CLEANING WATER

REMOVE Si OR Al (pH5 TO 6) → Si OR Al GEL

← COAGULANT

CLEANING WATER

REMOVE HEAVY METAL (pH7 TO 10) → HEAVY METAL

CLEANING WATER

REMOVE Mg (pH11 TO 12) → Mg GEL

**CaCO₃ ADJUSTMENT STEP**

K₂CO₃
Na₂CO₃

PREPARE Ca

↓

CaCO₃

## Description

Technical Field

The present invention relates to a method and a system for producing calcium carbonate, and particularly relates to a method and a system for producing calcium carbonate, in which an alkali content in the obtained calcium carbonate is controlled by controlling a reaction rate of a calcium ion-containing solution and an alkali solution.

Background Art

Calcium carbonate is used in various industrial fields of a filler such as a plastic, paper, or a coating material, a soil conditioner such as an agricultural chemical or a fertilizer, a food additive, a cosmetic raw material, and the like.

Calcium carbonate is synthesized by blowing carbon dioxide into a calcium hydroxide aqueous solution, or is synthesized by mixing an aqueous solution containing a calcium ion such as calcium chloride and a sodium carbonate aqueous solution.

Recently, as disclosed in Japanese Laid-open Patent Publication No. 2012-96975 (Patent Literature No. 1), in order to reduce carbon dioxide that is a greenhouse gas, calcium carbonate may be produced in the process of fixing carbon dioxide. In Patent Literature No. 1, in order to supply a large amount of calcium or the like, a calcium-containing waste, for example, a waste material or rock such as a waste concrete or a steel slag is used.

In addition, in Patent Literature No. 1, as a method for dissolving calcium from the calcium-containing waste, nitric acid is used. In this stage, not only elution of calcium but also dissolution of another element such as magnesium occurs in an aqueous solution. In Patent Literature No. 1, an aqueous solution of sodium carbonate produced by bringing sodium hydroxide and carbon dioxide into contact with each other is introduced into an aqueous solution containing calcium nitrate, magnesium nitrate, or the like such that calcium carbonate or magnesium carbonate is precipitated.

Japanese Laid-open Patent Publication No. 2021-79377 (Patent Literature No. 2) discloses a method for fixing carbon dioxide including a first contact step and a second contact step, in which, in the first contact step, a solution containing sodium hydroxide and gas containing carbon dioxide are brought into contact with each other, and in the second contact step, at least either a chloride of a Group 2 element or a chloride of a divalent metal element is added to the solution after the first contact step.

However, when calcium carbonate is synthesized by simply mixing a sodium carbonate solution obtained by bringing a calcium solution obtained using a calcium-containing waste, for example, a solution containing sodium hydroxide and gas containing carbon dioxide into contact with each other without any control, there is a problem in that the obtained product contains a large amount of alkali.

Citation List

Patent Literature

[Patent Literature No. 1] Japanese Laid-open Patent Publication No. 2012-96975
[Patent Literature No. 2] Japanese Laid-open Patent Publication No. 2021-79377

Summary of Invention

Technical Problem

An object of the present invention is to solve the above-described problem and to provide a method and a system for producing calcium carbonate, in which a content of alkali in calcium carbonate obtained using a calcium-containing waste can be controlled.

Solution to Problem

In order to solve the problem, a method and a system for producing calcium carbonate according to the present invention have the following technical features.

(1) According to the present invention, there is provided a method for producing calcium carbonate from a calcium-containing waste, including: a calcium dissolution step of adding aqueous hydrochloric acid to a calcium-containing waste and dissolving calcium to produce an aqueous solution containing a calcium ion; a separation step of adjusting a hydrogen ion concentration index of the aqueous solution containing a calcium ion and separating a component containing at least one selected from the group consisting of Si, Al, Mg, and heavy metal from the aqueous solution; and a calcium carbonate preparation step of preparing calcium carbonate by adding an aqueous solution containing potassium carbonate and/or sodium carbonate to the calcium ion-containing aqueous solution obtained in the separation step to cause a reaction to occur, in which in the calcium carbonate preparation step, an addition rate of the aqueous solution containing potassium carbonate and/or sodium carbonate is controlled such that $\kappa$ represented by the following expression is 3000 or lower,

$\kappa$ = (Production Rate ($\gamma$cc) of $CaCO_3$) $\times$ (Potassium or Sodium Concentration in Solution After Reaction)/(1 - $\alpha$)

where in the expression,
Production Rate (ycc) of $CaCO_3$ = [(Addition Rate of Aqueous Solution Containing Potassium Carbonate and/or Sodium Carbonate) $\times$ (Concentration of Aqueous Solution Containing Potassium Carbonate and/or Sodium Carbonate)]/Amount of Solution after Reaction (mmol-$CaCO_3$/L/min), and

$$\alpha \text{ (Calcium Reaction Rate)} = CO_3/Ca$$

($\alpha \leq 1$, $CO_3$ represents a carbonate ion content in a potassium carbonate and/or sodium carbonate solution, and Ca represents a calcium content in a calcium ion solution).
(2) The method for producing calcium carbonate according to (1),
in which the addition rate and a concentration of the aqueous solution containing potassium carbonate and/or sodium carbonate are controlled such that $\kappa$ is 30 or lower.
(3) The method for producing calcium carbonate according to (1),
in which aqueous hydrochloric acid is added to a calcium-containing waste and calcium is dissolved to produce an aqueous solution containing a calcium ion.
(4) The method for producing calcium carbonate according to (1) or (3),
in which the potassium carbonate and/or sodium carbonate aqueous solution used in the step of preparing the calcium carbonate is produced by bringing carbon dioxide into contact with the aqueous solution containing potassium hydroxide and/or sodium hydroxide.
(5) The method for producing calcium carbonate according to (4),
in which as the carbon dioxide, combustion exhaust gas containing carbon dioxide exhausted from a cement manufacturing facility is used.
(6) The method for producing calcium carbonate according to (1) or (3),
in which the calcium-containing waste contains desalination dust obtained from a desalination bypass portion of a cement manufacturing facility.
(7) According to the present invention, there is provided a calcium carbonate production system producing calcium carbonate from a calcium-containing waste, including: calcium dissolution means for adding aqueous hydrochloric acid to a calcium-containing waste and dissolving calcium to produce an aqueous solution containing a calcium ion; separation means for adjusting a hydrogen ion concentration index of the aqueous solution containing a calcium ion and separating a component containing at least one selected from the group consisting of Si, Al, Mg, and heavy metal from the aqueous solution; and calcium carbonate preparation means for preparing calcium carbonate using an aqueous solution obtained by the separation means and an aqueous solution containing potassium carbonate and/or sodium carbonate, in which in the calcium carbonate preparation means, an addition rate of the aqueous solution containing potassium carbonate and/or sodium carbonate is controlled such that $\kappa$ represented by the following expression is 3000 or lower,

$\kappa$ = (Production Rate ($\gamma$cc) of $CaCO_3$) $\times$ (Potassium or Sodium Concentration in Solution After Reaction)/(1 - $\alpha$)

where in the expression,
Production Rate (ycc) of $CaCO_3$ = [(Addition Rate of Aqueous Solution Containing Potassium Carbonate and/or Sodium Carbonate) $\times$ (Concentration of Aqueous Solution Containing Potassium Carbonate and/or Sodium Carbonate)]/Amount of Solution after Reaction (mmol-$CaCO_3$/L/min), and

$$\alpha \text{ (Calcium Reaction Rate)} = CO_3/Ca \ (\alpha \leq 1, CO_3$$

represents a carbonate ion content in a potassium carbonate and/or sodium carbonate solution, and Ca represents a calcium content in a calcium ion solution).

(8) The calcium carbonate production system according to (7),

in which the addition rate and a concentration of the aqueous solution containing potassium carbonate and/or sodium carbonate are controlled such that $\kappa$ is 30 or lower.

(9) The calcium carbonate production system according to (7) or (8), further including:

potassium carbonate and/or sodium carbonate production means for producing the potassium carbonate and/or sodium carbonate aqueous solution used in the calcium carbonate preparation means by bringing carbon dioxide into contact with the aqueous solution containing potassium hydroxide and/or sodium hydroxide.

(10) The calcium carbonate production system according to (9),

in which as the carbon dioxide, carbon dioxide exhausted from a cement manufacturing facility is used.

(11) The calcium carbonate production system according to (7),

in which the calcium-containing waste contains desalination dust obtained from a desalination bypass portion of the cement manufacturing facility.

Advantageous Effects of Invention

With the production method according to the present invention, calcium carbonate having a desired alkali content can be produced by controlling the alkali content in the prepared calcium carbonate, and particularly calcium carbonate where the alkali content is reduced can be prepared.

Accordingly, the calcium carbonate where the alkali content is reduced that is obtained using the method according to the present invention can be used as a cement raw material or the like.

In addition, calcium carbonate can be produced using calcium and a calcium-containing waste, and carbon dioxide can be obtained using combustion exhaust gas, which can promote the effective use of a waste.

In particular, simply by adjusting the hydrogen ion concentration index, various impurities such as Mg can be easily removed from the aqueous solution containing calcium. Therefore, the production step of calcium carbonate is also not complicated.

In addition, the production system according to the present invention can effectively perform the production method according to the present invention.

Brief Description of Drawings

FIG. 1 is a flowchart illustrating an example of a method for producing calcium carbonate according to the present invention.

FIG. 2 is a diagram illustrating an example of producing calcium carbonate using calcium carbonate and carbon dioxide according to the present invention.

FIG. 3 is a diagram illustrating a relationship between an index $\kappa$ and an alkali content ($Na_2O$) in the obtained calcium carbonate when calcium carbonate is prepared.

FIG. 4 is an enlarged view illustrating a part of FIG. 3.

Description of Embodiments

Hereinafter, a method and a system for producing calcium carbonate according to the present invention will be described using a preferable example with reference to the drawings.

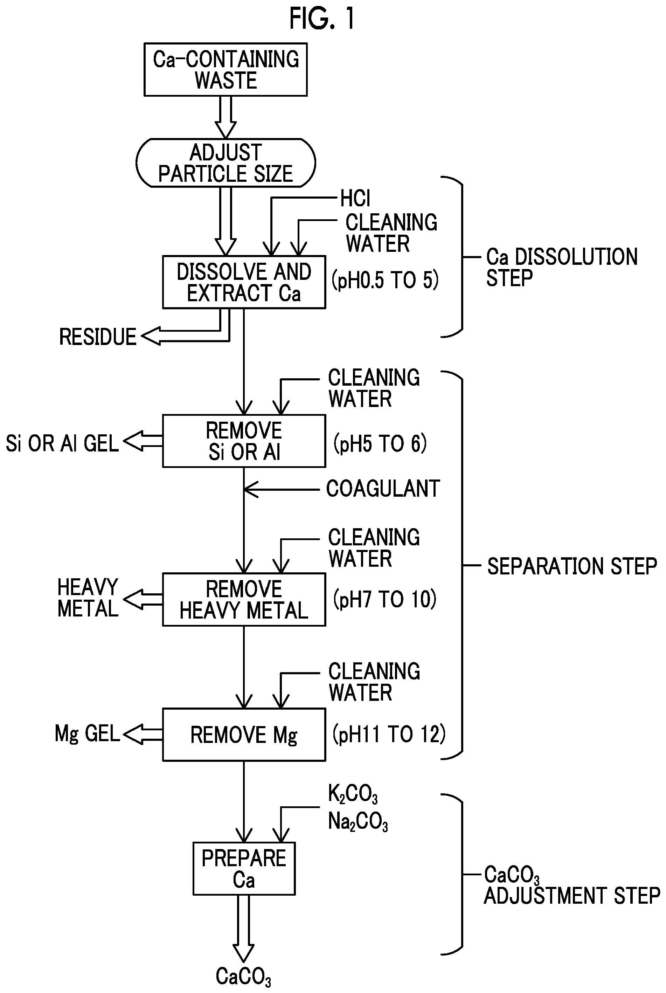

As illustrated in FIG. 1, according to the present invention, there is provided a method for producing calcium carbonate (calcium carbonate production system) of producing calcium carbonate from a calcium (Ca)-containing waste, the method for producing calcium carbonate including: a calcium dissolution step (calcium dissolution means) of adding aqueous hydrochloric acid to a calcium-containing waste and dissolving calcium to produce an aqueous solution containing a calcium ion; a separation step (separation means) of adjusting a hydrogen ion concentration index of the aqueous solution containing a calcium ion and separating a component containing at least one selected from the group consisting of Si, Al, Mg, and heavy metal from the aqueous solution; and a calcium carbonate preparation step (calcium carbonate preparation means) of preparing calcium carbonate using an aqueous solution obtained in the separation step (separation means) and an aqueous solution containing potassium carbonate and/or sodium carbonate.

In FIG. 1, a double-line arrow represents the flow of a solid, and a single-line arrow represents the flow of a liquid.

In particular, in the production method (production system) according to the present invention, when calcium carbonate is produced by adding an aqueous solution containing potassium carbonate and/or sodium carbonate to the calcium ion-containing aqueous solution to cause a reaction to occur (in the calcium carbonate preparation means), an addition rate of the aqueous solution containing potassium carbonate and/or sodium carbonate is controlled such that $\kappa$ represented by the following expression is 3000 or lower and preferably 30 or lower.

$\kappa$ = [(Addition Rate of Aqueous Solution Containing Potassium Carbonate and/or Sodium Carbonate) $\times$ (Concentration of Aqueous Solution Containing Potassium Carbonate and/or Sodium Carbonate)]/(1 - $\alpha$)

where in the expression,
Production rate (ycc) of $CaCO_3$ = (Addition rate of $Na_2CO_3$ solution $\times$ Concentration of $Na_2CO_3$ solution)/Amount of Solution after Reaction (mmol-$CaCO_3$/L/min)

$$\alpha \text{ (Calcium Reaction Rate)} = CO_3/Ca$$

($\alpha \leq 1$, $CO_3$ represents a carbonate ion content in a potassium carbonate and/or sodium carbonate solution, and Ca represents a calcium content in a calcium ion solution).

By providing the index $\kappa$ and controlling the rate at which the aqueous solution containing potassium carbonate and/or sodium carbonate is added to the calcium ion-containing aqueous solution and the concentration, the alkali content in the prepared calcium carbonate can be controlled and reduced.

As the addition rate decreases and as the concentration decreases, the index $\kappa$ decreases, and the alkali content in the obtained calcium carbonate is reduced.

A calcium material for preparing the aqueous solution containing a calcium ion used in the present invention is not particularly limited as long as the calcium material is a material containing calcium. For example, the calcium (Ca)-containing waste can be used, and examples thereof include incinerated ash such as a general waste or an industrial waste, fly ash exhausted from a thermal power plant or the like, slag, a waste concrete, ready-mixed concrete sludge, biochemical ash, and desalination dust obtained from a desalination bypass portion of a cement manufacturing facility.

In particular, as described below, the desalination dust obtained from the desalination bypass portion in the cement manufacturing facility contains a potassium chloride component, and thus can be suitably used for the present invention.

The particle size of the Ca-containing waste is adjusted to be in a range of 1000 $\mu$m or less and more preferably 100 $\mu$m or more and 500 $\mu$m or less. As a result, Ca can be easily extracted.

In the Ca dissolution step (Ca dissolution means), aqueous hydrochloric acid is added to the Ca-containing waste of which the particle size is adjusted to adjust the hydrogen ion concentration index to be in a range of preferably pH of 0.5 or higher and pH of 5 or lower.

At this time, cleaning water may be optionally added. Cleaning is performed to replace a liquid in a solid content with fresh water during solid-liquid separation.

A reaction time required for Ca extraction from the Ca-containing waste is, for example, 120 minutes or shorter and preferably 30 minutes or longer and 60 minutes or shorter. In addition, the dissolution and extraction can also be performed in multiple stages, in particular, in a multi-stage counter current.

The temperature of an aqueous solution containing hydrochloric acid during Ca extraction is to be in a range of preferably room temperature or higher and more preferably 20°C or higher and 70°C or lower. For example, since a membrane used in the bipolar membrane electrodialysis (BMED) treatment described below described below is an organic membrane, it is desirable that the temperature of the aqueous solution is also set in consideration of the heat-resistant temperature of the membrane.

In the Ca dissolution step (Ca dissolution means), a residue and a Ca ion-containing aqueous solution are separated from each other, and the residue can be used as, for example, a cement raw material in a cement manufacturing facility.

The aqueous solution containing a Ca ion obtained in the Ca dissolution step (Ca dissolution means) contains an impurity ion other than Ca, and the impurity ion is separated by adjusting the hydrogen ion concentration index in the separation step (separation means).

By adjusting the pH of the aqueous solution containing a Ca ion obtained in the Ca dissolution step (Ca dissolution means) to, for example, pH of 5 to 6 using sodium hydroxide or potassium hydroxide, a Si or Al ion in the aqueous solution containing a Ca ion can be removed as a gel. In addition, optionally, cleaning water such as fresh water can also be added to clean a solid content. This gel can be used as a cement raw material.

Next, by adjusting the pH of the Ca ion-containing aqueous solution from which the Si or Al ion is removed to, for example, pH of 7 to 10, using sodium hydroxide or potassium hydroxide, heavy metal such as a Pb or Cr ion can be separated. In addition, optionally, cleaning water such as fresh water can also be added, and a solid content is cleaned by the cleaning.

Before removing the heavy metal, optionally, a coagulant can also be added to the Ca ion-containing aqueous solution. For example, a polymer coagulant or an inorganic coagulant can be used. Examples of the inorganic coagulant include an iron salt such as ferric polysulfate and an aluminum salt such as aluminum sulfate or aluminum polychloride. As the polymer coagulant, for example, an anionic, nonionic, or cationic coagulant that is suitable in terms of pH and particle properties may be used, and examples thereof include a polyacrylamide-based coagulant, a sodium polyacrylate-based coagulant, and a polyacrylic ester-based coagulant.

Next, by adjusting the pH of the Ca ion-containing aqueous solution from which the heavy metal ion is removed to pH of 11 to 12, using sodium hydroxide or potassium hydroxide, an Mg ion in the aqueous solution can be removed as a gel. In addition, optionally, cleaning water such as fresh water can also be added, and a solid content is cleaned by the cleaning.

When the aqueous solution containing potassium carbonate and/or sodium carbonate is added to the Ca ion-containing aqueous solution from which the unnecessary impurities are separated and removed, by controlling the addition rate of the aqueous solution containing potassium carbonate and/or sodium carbonate, the pH of the mixed solution is 11.5 to 13 and preferably 12 to 12.5, and calcium carbonate where the alkali ($Na_2O$, $K_2O$) content is controlled is produced (calcium carbonate production means). Next, the calcium carbonate and the potassium chloride and/or sodium chloride aqueous solution are separated from each other, and the calcium carbonate is recovered. Actually, when the purity of calcium carbonate is calculated from weight loss at 550°C to 800°C using a thermal analysis equipment (TG), a value of 95.7% is obtained.

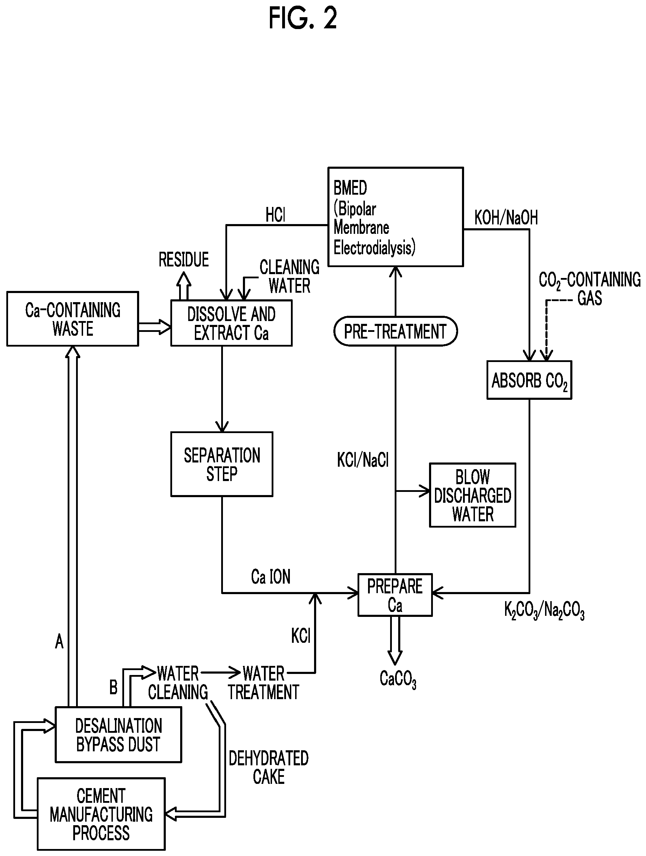

FIG. 2 is a schematic diagram of FIG. 1 where a step (system) of fixing carbon dioxide and producing potassium carbonate/sodium carbonate is incorporated.

In FIG. 2, a double-line arrow represents the flow of a solid, a single-line arrow represents the flow of a liquid, and a dotted line represents the flow of a gas.

The aqueous hydrochloric acid used in the Ca dissolution step (Ca dissolution means) that is an example for preparing the aqueous solution containing a calcium ion is not particularly limited as long as it is aqueous hydrochloric acid. For example, aqueous hydrochloric acid that is produced from an aqueous solution containing potassium chloride and/or sodium chloride through a bipolar membrane electrodialysis (BMED) treatment (BMED treatment means) can also be used.

In addition, as to the potassium chloride and/or the sodium chloride, an aqueous solution containing potassium chloride and/or sodium chloride after recovering the calcium carbonate of FIG. 1 can be used.

Regarding the potassium chloride and/or the sodium chloride separated from the calcium carbonate after the calcium carbonate production step, optionally, a pretreatment of, for example, removing fine particles through a MF membrane (microfiltration membrane) and concentrating the aqueous solution through a RO membrane (reverse osmosis membrane) can also be performed.

For example, the bipolar membrane electrodialysis (BMED) electrically operates to produce the aqueous solution containing potassium hydroxide and/or sodium hydroxide other than aqueous hydrochloric acid at the same time.

In addition, as illustrated in FIG. 2, carbon dioxide is brought into contact with the aqueous solution containing potassium hydroxide and/or sodium hydroxide to absorb carbon dioxide and to thereby produce an aqueous solution containing potassium carbonate and/or sodium carbonate.

This aqueous solution containing potassium carbonate and/or sodium carbonate is applied to the calcium carbonate production step of FIG. 1, and is used for producing calcium carbonate.

As to carbon dioxide, for example, carbon dioxide in combustion exhaust gas from a thermal power plant or the like or in exhaust gas from a cement manufacturing facility can be used, and carbon dioxide in the atmosphere can also be directly absorbed and used.

In the calcium carbonate production step (production means) of the production method according to the present invention, by controlling a reaction rate of the aqueous solution containing a calcium ion and the aqueous solution containing potassium carbonate and/or sodium carbonate, specifically, an addition rate and a concentration, the alkali ($Na_2O$, $K_2O$) content in the obtained calcium carbonate can be controlled.

Specifically, by adjusting the index $\kappa$ represented by the following expression to be 3000 or lower and preferably 30 or lower, the calcium carbonate where the alkali content is reduced can be prepared, and can be effectively used as a cement raw material or the like.

$\kappa$ = (Production Rate ($\gamma cc$) of $CaCO_3$) $\times$ (Potassium or Sodium Concentration in Solution After Reaction)/(1 - $\alpha$)

where in the expression,
Production Rate (ycc) of $CaCO_3$ = [(Addition Rate of Aqueous Solution Containing Potassium Carbonate and/or Sodium Carbonate) $\times$ (Concentration of Aqueous Solution Containing Potassium Carbonate and/or Sodium Carbonate)]/Amount of Solution after Reaction (mmol-$CaCO_3$/L/min), and

$$\alpha \text{ (Calcium Reaction Rate)} = CO_3/Ca$$

($\alpha \leq 1$, $CO_3$ represents a carbonate ion content in a potassium carbonate and/or sodium carbonate solution, and Ca represents a calcium content in a calcium ion solution).

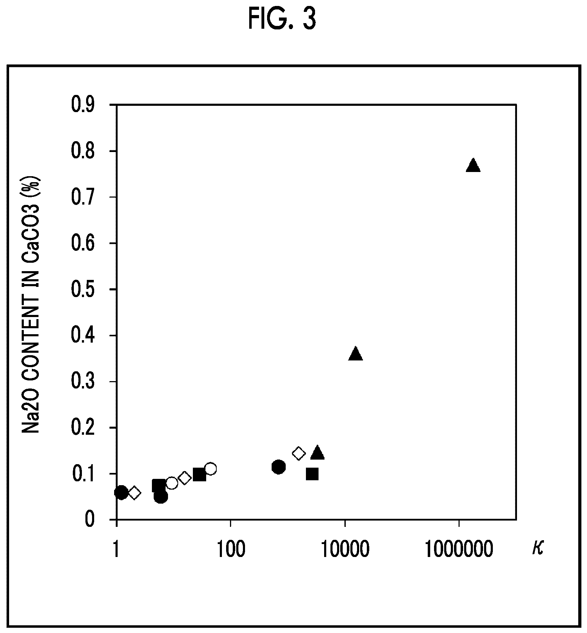

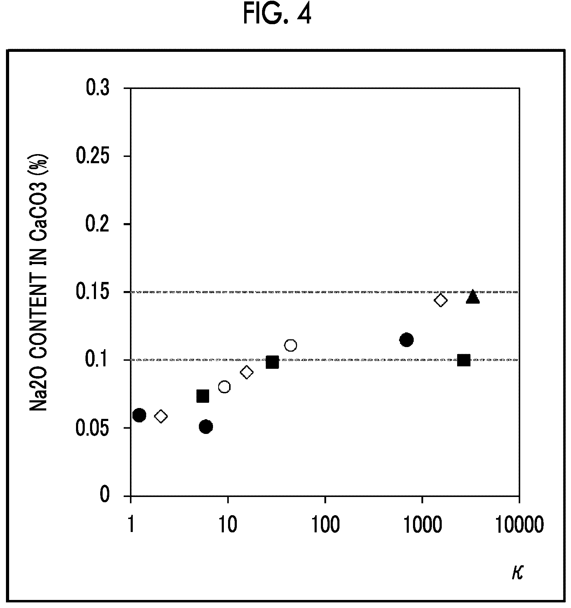

Hereinafter, specifically, an example of adding sodium carbonate to the calcium ion solution is shown in Table 1, and the result thereof is shown in Table 1 and FIGS. 3 and 4. FIG. 4 is an enlarged view illustrating a part of FIG. 3.

In Table 1, sodium carbonate is excessively added, but when $\alpha > 1$, calcium carbonate is not produced. Therefore, the content of alkali oxide in the calcium carbonate does not increase. In addition, in the expression, when $\alpha$ is 1, $1 - \alpha$ is 0. Therefore, in the example of Table 1, for convenience of description, when $\alpha = 1$, $(1.001 - \alpha)$ is calculated.

[Table 1]

| Example | α | Ca Solution | | Na₂CO₃ Solution | | | | | | Solution after Reaction | | | CaCO₃ | | | Production Rate of CaCO₃ | | Representation in FIGS. 3 and 4 |
|---|---|---|---|---|---|---|---|---|---|---|---|---|---|---|---|---|---|---|
| | CO₃/Ca | Amount | Ca Concentration | Target Addition Rate | Addition Amount | NaCO₃ Concentration | Actual Addition Time | Addition Rate | Na Content | Amount of Solution | Na Cotent | Na | Amount | Na₂O | Na₂O Content | γcc | κ | |
| | | ml | mol/L | ml/min | ml | mol/L | min | ml/min | mol | mL | mol | mol/L | g | % | g | mmol/(min·L) | | |
| 1 | 0.5 | 200 | 0.3 | | 60 | 0.5 | 45 | 1.3 | 0.030 | 260 | 0.06 | 0.24 | 2.97 | 0.06 | 0.0018 | 2.564 | 1.226 | |
| 2 | 0.9 | 200 | 0.3 | 1.5 | 108 | 0.5 | 82 | 1.3 | 0.054 | 308 | 0.09 | 0.28 | 5.17 | 0.05 | 0.0026 | 2.138 | 5.929 | • |
| 3 | 1 | 200 | 0.3 | | 132 | 0.5 | 85 | 1.6 | 0.066 | 332 | 0.10 | 0.30 | 5.72 | 0.12 | 0.0066 | 2.339 | 692.197 | |
| 4 | 0.5 | 200 | 0.3 | | 60 | 0.5 | 27 | 2.2 | 0.030 | 260 | 0.06 | 0.24 | 2.99 | 0.06 | 0.0018 | 4.274 | 2.043 | |
| 5 | 0.9 | 200 | 0.3 | 3.0 | 108 | 0.5 | 31 | 3.5 | 0.054 | 308 | 0.09 | 0.28 | 5.22 | 0.09 | 0.0048 | 5.656 | 15.683 | ◇ |
| 6 | 1 | 200 | 0.3 | | 132 | 0.5 | 38 | 3.5 | 0.066 | 332 | 0.10 | 0.30 | 5.76 | 0.14 | 0.0083 | 5.231 | 1548.334 | |
| 7 | 0.5 | 200 | 0.3 | | 60 | 0.5 | 10 | 6.0 | 0.030 | 260 | 0.06 | 0.24 | 2.96 | 0.07 | 0.0022 | 11.538 | 5.515 | |
| 8 | 0.9 | 200 | 0.3 | 6.0 | 108 | 0.5 | 17 | 6.4 | 0.054 | 308 | 0.09 | 0.28 | 5.25 | 0.10 | 0.0052 | 10.313 | 28.598 | ■ |
| 9 | 1 | 200 | 0.3 | | 132 | 0.5 | 22 | 6.0 | 0.066 | 332 | 0.10 | 0.30 | 5.68 | 0.10 | 0.0057 | 9.036 | 2674.396 | |
| 10 | 0.5 | 200 | 0.3 | 10.0 | 60 | 0.5 | 6 | 10.0 | 0.030 | 260 | 0.06 | 0.24 | 3.01 | 0.08 | 0.0024 | 19.231 | 9.192 | ○ |
| 11 | 0.9 | 200 | 0.3 | | 108 | 0.5 | 11 | 9.8 | 0.054 | 308 | 0.09 | 0.28 | 5.26 | 0.11 | 0.0058 | 15.939 | 44.197 | |
| 12 | 0.5 | 200 | 0.3 | | 60 | 0.5 | 0.017 | 3600 | 0.030 | 260 | 0.06 | 0.24 | 3.04 | 0.15 | 0.0045 | 6923.077 | 3309.050 | |
| 13 | 0.9 | 200 | 0.3 | 3000 | 108 | 0.5 | 0.032 | 3411 | 0.054 | 308 | 0.09 | 0.28 | 5.27 | 0.36 | 0.0190 | 5536.569 | 15352.618 | ▲ |
| 14 | 1 | 200 | 0.3 | | 132 | 0.5 | 0.033 | 3960 | 0.066 | 332 | 0.10 | 0.30 | 5.92 | 0.77 | 0.0456 | 5963.855 | 1765101 | |

The value of the sodium oxide content in calcium carbonate in Table 1 and FIGS. 3 and 4 is a value measured by an energy-dispersive X-ray fluorescence spectrometer (Epsilon 3, manufactured by Malvern Panalytical Ltd.).

It can be seen from Table 1 and FIGS. 3 and 4 that, as the calcium reaction rate ($\alpha$) approaches 1, the sodium content incorporated into the obtained calcium carbonate increases. That is, by adjusting the addition rate of the aqueous solution containing sodium carbonate to be slower than the addition rate of the aqueous solution containing a calcium ion such that the production rate of calcium carbonate is slowed, the alkali content in the obtained calcium carbonate can be reduced.

According to the calcium carbonate obtained using the method (system) according to the present invention, calcium carbonate that does not contain impurities such as magnesium carbonate, has a high purity, and has a controlled alkali content can be obtained, and when the alkali content in the obtained calcium carbonate is 0.13% or less, preferably 0.1% or less, and more preferably 0.8% or less, calcium carbonate where the alkali content is reduced can be effectively used as a cement raw material or the like.

Industrial Applicability

As described above, with the method (system) according to the present invention, calcium carbonate capable of producing calcium carbonate that has a high purity and has a controlled alkali content using a calcium-containing waste can be produced, and the obtained calcium carbonate can be applied to a filler such as plastic, paper, or a coating material or a cosmetic raw material.

In addition, the calcium carbonate where the alkali content is reduced can be used not only as a cement raw material but also as a cement weighting agent.

**Claims**

1. A method for producing calcium carbonate from a calcium-containing waste, comprising:

   a calcium dissolution step of adding aqueous hydrochloric acid to a calcium-containing waste and dissolving calcium to produce an aqueous solution containing a calcium ion;
   a separation step of adjusting a hydrogen ion concentration index of the aqueous solution containing a calcium ion and separating a component containing at least one selected from the group consisting of Si, Al, Mg, and heavy metal from the aqueous solution; and
   a calcium carbonate preparation step of preparing calcium carbonate by adding an aqueous solution containing potassium carbonate and/or sodium carbonate to the calcium ion-containing aqueous solution obtained in the separation step to cause a reaction to occur,
   wherein in the calcium carbonate preparation step, an addition rate of the aqueous solution containing potassium carbonate and/or sodium carbonate is controlled such that $\kappa$ represented by the following expression is 3000 or lower,

   $\kappa$ = (Production Rate ($\gamma$cc) of CaCO$_3$) $\times$ (Potassium or Sodium Concentration in Solution After Reaction)/(1 - $\alpha$)

   where in the expression,
   Production Rate (ycc) of CaCO$_3$ = [(Addition Rate of Aqueous Solution Containing Potassium Carbonate and/or Sodium Carbonate) $\times$ (Concentration of Aqueous Solution Containing Potassium Carbonate and/or Sodium Carbonate)]/Amount of Solution after Reaction (mmol-CaCO$_3$/L/min), and
   $\alpha$ (Calcium Reaction Rate) = CO$_3$/Ca ($\alpha \leq 1$, CO$_3$ represents a carbonate ion content in a potassium carbonate and/or sodium carbonate solution, and Ca represents a calcium content in a calcium ion solution).

2. The method for producing calcium carbonate according to claim 1,
   wherein the addition rate and a concentration of the aqueous solution containing potassium carbonate and/or sodium carbonate are controlled such that $\kappa$ is 30 or lower.

3. The method for producing calcium carbonate according to claim 1, wherein aqueous hydrochloric acid is added to a calcium-containing waste and calcium is dissolved to produce an aqueous solution containing a calcium ion.

4. The method for producing calcium carbonate according to claim 1 or 3, wherein the potassium carbonate and/or sodium carbonate aqueous solution used in the step of preparing the calcium carbonate is produced by bringing carbon dioxide into contact with the aqueous solution containing potassium hydroxide and/or sodium hydroxide.

5. The method for producing calcium carbonate according to claim 4, wherein as the carbon dioxide, combustion exhaust gas containing carbon dioxide exhausted from a cement manufacturing facility is used.

6. The method for producing calcium carbonate according to claim 1 or 3, wherein the calcium-containing waste contains desalination dust obtained from a desalination bypass portion of a cement manufacturing facility.

7. A calcium carbonate production system producing calcium carbonate from a calcium-containing waste, comprising:

calcium dissolution means for adding aqueous hydrochloric acid to a calcium-containing waste and dissolving calcium to produce an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution; and
calcium carbonate preparation means for preparing calcium carbonate using an aqueous solution obtained by the separation means and an aqueous solution containing potassium carbonate and/or sodium carbonate,
wherein in the calcium carbonate preparation means, an addition rate of the aqueous solution containing potassium carbonate and/or sodium carbonate is controlled such that $\kappa$ represented by the following expression is 3000 or lower,

$\kappa$ = (Production Rate ($\gamma$cc) of $CaCO_3$) × (Potassium or Sodium Concentration in Solution After Reaction)/(1 - $\alpha$)

where in the expression,
Production Rate (ycc) of $CaCO_3$ = [(Addition Rate of Aqueous Solution Containing Potassium Carbonate and/or Sodium Carbonate) × (Concentration of Aqueous Solution Containing Potassium Carbonate and/or Sodium Carbonate)]/Amount of Solution after Reaction (mmol-$CaCO_3$/L/min), and

$$\alpha \text{ (Calcium Reaction Rate)} = CO_3/Ca$$

($\alpha \leq 1$, $CO_3$ represents a carbonate ion content in a potassium carbonate and/or sodium carbonate solution, and Ca represents a calcium content in a calcium ion solution).

8. The calcium carbonate production system according to claim 7,
wherein the addition rate and a concentration of the aqueous solution containing potassium carbonate and/or sodium carbonate are controlled such that $\kappa$ is 30 or lower.

9. The calcium carbonate production system according to claim 7 or 8, further comprising:
potassium carbonate and/or sodium carbonate production means for producing the potassium carbonate and/or sodium carbonate aqueous solution used in the calcium carbonate preparation means by bringing carbon dioxide into contact with the aqueous solution containing potassium hydroxide and/or sodium hydroxide.

10. The calcium carbonate production system according to claim 9,
wherein as the carbon dioxide, carbon dioxide exhausted from a cement manufacturing facility is used.

11. The calcium carbonate production system according to claim 10,
wherein the calcium-containing waste contains desalination dust obtained from a desalination bypass portion of the cement manufacturing facility.

## FIG. 1

Ca-CONTAINING WASTE

↓

ADJUST PARTICLE SIZE

↓

HCl
CLEANING WATER

DISSOLVE AND EXTRACT Ca (pH0.5 TO 5) — Ca DISSOLUTION STEP

RESIDUE ←

↓

CLEANING WATER

Si OR Al GEL ← REMOVE Si OR Al (pH5 TO 6)

← COAGULANT

CLEANING WATER

HEAVY METAL ← REMOVE HEAVY METAL (pH7 TO 10) — SEPARATION STEP

CLEANING WATER

Mg GEL ← REMOVE Mg (pH11 TO 12)

↓

K₂CO₃
Na₂CO₃

PREPARE Ca — CaCO₃ ADJUSTMENT STEP

↓

CaCO₃

# FIG. 2

FIG. 3

FIG. 4

**EP 4 585 564 A1**

# INTERNATIONAL SEARCH REPORT

International application No.

**PCT/JP2023/032545**

| A. | CLASSIFICATION OF SUBJECT MATTER |
|---|---|

*C01F 11/18*(2006.01)i; *B09B 3/70*(2022.01)i
FI:   C01F11/18 A ZAB; B09B3/70

According to International Patent Classification (IPC) or to both national classification and IPC

| B. | FIELDS SEARCHED |
|---|---|

Minimum documentation searched (classification system followed by classification symbols)

C01F11/18; B09B3/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2020/0239978 A1 (ELIXSYS INC.) 30 July 2020 (2020-07-30)<br>paragraphs [0007], [0057]-[0059], [0065], [0071], [0131]-[0133], fig. 1, 2, 31 | 1-11 |
| Y | 日本化学会編, 実験化学講座5 化学実験のための基礎技術, 第5版, 丸善株式会社, 2005, pp. 29, 30, (MARUZEN CO., LTD.), non-official translation (The Chemical Society of Japan. Laboratory of Experimental Chemistry 5, Basic Technology for Chemical Experiments, 5th Edition.)<br>p. 30, lines 1-4 | 1-11 |
| A | JP 2008-143765 A (SHIMIZU CORP.) 26 June 2008 (2008-06-26)<br>entire text, all drawings | 1-11 |
| A | US 2021/0017035 A1 (ARELAC, INC.) 21 January 2021 (2021-01-21)<br>entire text, all drawings | 1-11 |
| A | JP 2007-117966 A (SUMITOMO OSAKA CEMENT CO., LTD.) 17 May 2007 (2007-05-17)<br>entire text, all drawings | 1-11 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/032545**

| Patent document cited in search report | | | Publication date (day/month/year) | Patent family member(s) | | | Publication date (day/month/year) |
|---|---|---|---|---|---|---|---|
| US | 2020/0239978 | A1 | 30 July 2020 | WO 2020/154699 A1 paragraphs [0007], [0125]-[0127], [0133], [0139], [0179]-[0181], fig. 18, 19, 48 | | | |
| JP | 2008-143765 | A | 26 June 2008 | (Family: none) | | | |
| US | 2021/0017035 | A1 | 21 January 2021 | WO 2021/016200 A1 entire text, all drawings CN 114430697 A | | | |
| JP | 2007-117966 | A | 17 May 2007 | (Family: none) | | | |

Form PCT/ISA/210 (patent family annex) (January 2015)

**EP 4 585 564 A1**

**Patent documents cited in the description**

- JP 2012096975 A

- JP 2021079377 A